# EUROPÄISCHE PATENTSCHRIFT

(11) **EP 1 352 282 B1**
(45) Veröffentlichungstag und Bekanntmachung des Hinweises auf die Patenterteilung: **24.01.2007**
(21) Anmeldenummer: 01984861.3
(22) Anmeldetag: 18.12.2001
(51) Int. Cl.: G02B 21/00

(54) **ANORDNUNG ZUM MANUELLEN EINSTELLEN EINER FOKUSPOSITION BEI MIKROSKOPEN**
ARRANGEMENT FOR THE MANUAL ADJUSTMENT OF A FOCUS POSITION ON MICROSCOPES
DISPOSITIF DE REGLAGE MANUEL DE POSITION FOCALE DE MICROSCOPES

(30) Priorität: 16.01.2001 DE 10101623
(43) Veröffentlichungstag der Anmeldung: 15.10.2003
(73) Patentinhaber: CARL ZEISS JENA GmbH, 07745 Jena (DE)
(72) Erfinder: KAUFHOLD, Tobias, 07749 Jena (DE); JOHN, Matthias, 07751 Kleinpürschütz (DE)
(86) Internationale Anmeldenummer: PCT/EP2001/014916
(87) Internationale Veröffentlichungsnummer: WO 2002/056082

(56) Entgegenhaltungen:
- DE-U- 8 715 891
- US-A- 4 653 878
- US-A- 5 557 456
- US-A- 5 684 627
- US-A- 5 825 531

## Beschreibung

Die Erfindung bezieht sich auf eine Anordnung zum manuellen Einstellen einer Fokusposition bei Mikroskopen mit motorisch ein Fokussierantrieb.

Eine wesentliche Voraussetzung für die mikroskopische Beobachtung ist die Scharfeinstellung der zu beobachtenden Probenausschnitte. Die jeweils zur Scharfeinstellung auf einen zu beobachtenden Probenausschnitt erforderliche Fokussierbewegung wird im Falle des klassischen Mikroskopaufbaues mit Hilfe von Getrieben realisiert, die über große Übersetzungen und hohe Feinfühligkeit der Einstellung verfügen.

Dabei kann die Fokussierbewegung manuell ausgelöst werden, beispielsweise,durch Drehen eines Antriebsknopfes, der die Drehbewegung über eine Spindel-Mutter-Verstelleinrichtung auf den Tisch oder das Mikroskopgehäuse überträgt und so eine Relativbewegung zwischen Mikroskopaufbau und Probe bewirkt.

Es sind aber auch Fokussieranordnungen üblich, bei denen die Positionierung der Probe relativ zum Mikroskopaufbau durch einen definiert angesteuerten Schrittmotor veranlaßt wird, wobei mit der Ansteuerung sowohl die Verstellgeschwindigkeit als auch der Verstellweg vorgegeben werden kann. Zu diesem technischen Gebiet gehört auch die nachfolgend beschriebene Erfindung, wobei die Geschwindigkeit der Fokussierbewegung und der Verstellweg in einer gewünschten Richtung der Fokussierbewegung durch Ansteuerbefehle über manuell zu betätigende Bedienelemente vorgegeben werden.

Die US 4 653 878 offenbart eine Anordnung zur manuellen Einstellung einer Fokusposition bei Mikroskopen, welche zwei Bedienelemente aufweist, wobei das erste Bedienelement eine "Restore"-Funktion aufweist und das zweite Bedienelement ein Schalter für die Einstellung der Verstellgeschwindigkeit bei der Fokussierbewegung ist.

Die Aufgabe der Erfindung besteht dabei darin, eine ergonomisch günstige Ausgestaltung der Bedienelemente und damit eine feinfühlige Auslösung der Stellbefehle zu schaffen.

Erfindungsgemäß weist die Anordnung zum Einstellen einer Fokusposition ein erstes Bedienelement zur Vorgabe einer Verstellrichtung und eines Verstellweges und ein zweites Bedienelement zur Vorgabe einer Verstellgeschwindigkeit auf.

Dabei sind beide Bedienelemente in Form von Drehknöpfen ausgebildet, wobei mit dem Drehwinkel am ersten Drehknopf eine Verstellweglänge für die Fokussierbewegung und mit dem Drehwinkel am zweiten Drehknopf eine Verstellgeschwindigkeit der Fokussierbewegung vorgegeben wird. Dabei sind die Veränderung des Drehwinkels am ersten Drehknopf der Veränderung des Verstellweges und die Veränderung des Drehwinkels am zweiten Drehknopf der Veränderung der Verstellgeschwindigkeit proportional. Die Richtung der Fokussierbewegung wird dabei jeweils mit der Drehrichtung der Drehknöpfe vorgegeben.

In einer besonders bevorzugten Ausgestaltung ist vorgesehen, daß die beiden Drehknöpfe konzentrisch um eine gemeinsame Achse drehbar und auf dieser Achse unmittelbar hintereinander angeordnet sind, wobei der Durchmesser des ersten Drehknopfes kleiner ausgeführt ist als der Durchmesser des zweiten Drehknopfes. Beide Drehknöpfe sind dabei über eine

Ansteuerschaltung bzw. über Stellglieder zur Erzeugung drehwinkelabhängiger Stellsignale mit der Bedien- und Steuereinrichtung des Mikroskops verbunden.

Damit ergibt sich ein wesentlicher Vorteil gegenüber den im Stand der Technik bekannten Anordnungen, da die Fokussierung bzw. auch Feinfokussierung leicht und feinfühlig ohne spürbaren Kraftaufwand möglich ist. Ein weiterer Vorteil besteht darin, daß bei Drehung der Drehknöpfe nicht nachgefaßt werden muß, um beispielsweise große Verstellwege zu realisieren.

Der erste Drehknopf ist nach beiden entgegengesetzten Richtungen frei drehbar; die Drehwinkel sind in beiden Drehrichtungen in Winkelinkremente geteilt und jedes Winkelinkrement entspricht einem oder mehreren Weginkrementen des Verstellweges.

Vorteilhaft weist der zweite Drehknopf eine "Null"-Lage auf, aus der er nach beiden entgegengesetzten Drehrichtungen gegen eine mit zunehmendem Verdrehwinkel anwachsende Rückstellkraft bis jeweils zu einer vorgegebenen Endlage verdrehbar ist. Dabei hat in der "Null"-Lage die Verstellgeschwindigkeit die Größe "Null", und ein zunehmender Drehwinkel nach der einen oder der anderen Drehrichtung entspricht einer zunehmenden Verstellgeschwindigkeit. In der jeweiligen Endlage erreicht die Verstellgeschwindigkeit ihr Maximum.

Bevorzugt ist vorgesehen, daß die Drehwinkel des zweiten Drehknopfes durch die Endlagen nach beiden entgegengesetzten Drehrichtungen auf jeweils maximal 45° begrenzt sind.

Aufgrund der zunehmenden Gegenkraft bei Verdrehung des ersten Drehknopfes zu einer der Endlagen hin kehrt dieser in die "Null"-Lage zurück, sobald der Drehknopf losgelassen wird, wobei die Fokussierbewegung zum Stillstand kommt.

Auf diese Weise ergibt sich eine sehr bedienungsfreundliche Handhabung, wobei mit den Fingern einer Hand in sehr feinfühliger Weise sowohl eine Grobverstellung durch Vorgabe der Verstellgeschwindigkeit als auch eine Feinverstellung durch Vorgabe einer Verstellweglänge möglich sind, während dabei die Beobachtung der sich mit der Verstellung verändernden Schärfe eines Probenausschnittes im Okular möglich ist.

Die erfindungsgemäße Anordnung ist vorteilhaft auch am motorischen Träger eines Stereomikroskops einsetzbar, wobei der Probentisch in der Regel feststehend angeordnet ist, während der gesamte Stereomikroskop-Aufbau zum Zwecke der Fokussierung anzuheben bzw. abzusenken ist, was hier in der beschriebenen Weise feinfühlig und ohne Kraftanstrengung veranlaßt werden kann.

Die Erfindung soll nachfolgend anhand eines Ausführungsbeispieles näher erläutert werden. Hierzu zeigt eine Zeichnung den prinzipiellen Aufbau der erfindungsgemäßen Anordnung.

Bei dem dargestellten Aufbau ist ein erstes Bedienelement in Form eines Drehknopfes 2 zur Grobfokussierung vorgesehen. Ein zweites Bedienelement in Form eines weiteren Drehknopfes 1 dient zur Feinfokussierung.

Als Fokussierbewegung soll hier stets die Zustellung in Richtung der Koordinate Z bzw. die Zustellbewegung zur Scharfeinstellung des Mikroskops auf einen ausgewählten Probenausschnitt, beispielsweise innerhalb der Tiefe einer Probe, verstanden werden.

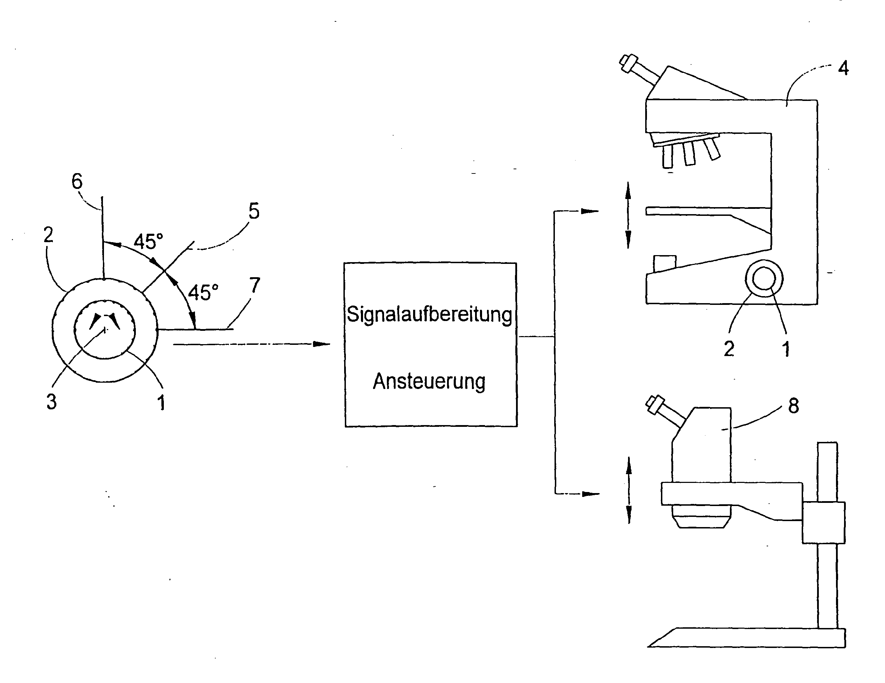

Erfindungsgemäß ist weiterhin vorgesehen, daß die beiden Drehknöpfe 1 und 2 konzentrisch um eine gemeinsame Achse 3 drehbar gelagert sind und auf dieser Achse unmittelbar hintereinander angeordnet sind. So befindet sich beispielsweise der Drehknopf 2 zwischen dem Drehknopf 1 und der Gehäuseaußenfläche eines Mikroskop-Aufbaus, wie dies an dem rechten Rand der Zeichnung anhand der Prinzipdarstellung eines Durchlichtmikroskopes 4 zu erkennen ist. Dabei ist der Durchmesser des ersten Drehknopfes 1 kleiner ausgeführt als der Durchmesser des zweiten Drehknopfes 2.

Eine weitere Besonderheit der erfindungsgemäßen Anordnung besteht darin, daß der zweite Drehknopf 2 eine "Null"-Lage 5 aufweist, von welcher aus er nach beiden entgegengesetzten Drehrichtungen beispielhaft um 45° verdrehbar ist. Dabei ist die Verdrehung nach beiden Richtungen durch Endlagen in Form von Anschlägen 6 und 7 begrenzt. Außerdem ist vorgesehen, daß mit zunehmendem Verdrehwinkel zu dem jeweiligen Anschlag 6 oder 7 hin eine Rückstellkraft anwächst, die beispielsweise durch Einordnung von Rückstellfedern zwischen einem Mitnehmer am Drehknopf 2 und einem gestellfesten Geräteteil erzielt werden kann.

Damit wird erreicht, daß der Drehknopf 2 beim Loslassen stets wieder die "Null"-Lage 5 einnimmt. Diesbezüglich ist nun weiterhin vorgesehen, daß die Verstellgeschwindigkeit die Größe "Null" hat, wenn sich der Drehknopf 2 in der "Null"-Lage 5 befindet, was dazu führt, daß die Fokussierbewegung zum Stillstand kommt, sobald der Drehknopf 2 losgelassen wird.

Der erste Drehknopf 1, der in seinem Durchmesser kleiner ausgeführt ist als der Drehknopf 2, ist nach beiden entgegengesetzten Richtungen hin frei drehbar, das heißt hier sind keine Endlagenbegrenzungen vorgesehen und es ist auch keine mit zunehmender Verdrehung zunehmende Rückstellkraft vorhanden.

Mit der Verdrehung des Drehknopfes 1 nach der einen oder anderen Drehrichtung hin wird jeweils eine zugeordnete Verstellrichtung und ein Verstellweg für die Bewegung des Objekttisches relativ zum Mikroskopaufbau vorgegeben.

Dazu ist der Drehknopf 1 mit einem inkrementalen Winkelgeber ausgestattet, und jedes Winkelinkrement löst über eine entsprechende Ansteuerung die Verstellung über einen oder mehrere Weginkremente nach der einen oder anderen Bewegungsrichtung in Abhängigkeit von der Drehrichtung aus.

Alternativ zu der Anordnung der beiden Drehknöpfe 1 und 2 am Mikroskopgehäuse, wie am Beispiel des Durchlichtmikroskopes 4 in der rechten Hälfte der Zeichnung dargestellt, können die Drehknöpfe 1 und 2 auch an einer frei beweglichen Handbedienungseinrichtung vorgesehen sein, die in diesem Falle über eine Ansteuer- und Versorgungsleitung mit dem Mikroskopaufbau verbunden ist.

Mit der erfindungsgemäßen Anordnung ist eine sehr feinfühlige und einfache Handhabung bei der Auslösung der Fokussierbewegung durch gezielte Ansteuerung des motorischen Antriebes möglich, indem mit den Fingern derselben Hand durch Verdrehung des Drehknopfes 1 eine Feinfokussierung und durch Verdrehung des Drehknopfes 2 eine Grobfokussierung veranlaßt wird.

### Bezugszeichenliste

- 1, 2: Drehknopf
- 3: Achse
- 4: Durchlichtmikroskop
- 5: "Null"-Lage
- 6, 7: Anschlag

- Z: Koordinate

## Patentansprüche

1. Anordnung zum manuellen Einstellen einer Fokusposition bei Mikroskopen mit motorischem Fokussierantrieb, ausgestattet
- mit einem ersten Bedienelement zur Vorgabe einer Verstellweglänge bei der Fokussierbewegung und
- mit einem zweiten Bedienelement zur Vorgabe einer Verstellgeschwindigkeit bei der Fokussierbewegung,
- wobei die Fokussierbewegung wahlweise entweder mit dem ersten oder mit dem zweiten Bedienelement ausgelöst werden kann bzw. beide Bedienelemente unabhängig voneinander bedienbar sind,
**dadurch gekennzeichnet, daß** beide Bedienelemente in Form von Drehknöpfen (1, 2) ausgebildet sind, wobei
- mit der Drehrichtung beider Drehknöpfe (1, 2) die Verstellrichtung der Fokussierbewegung,
- mit dem Drehwinkel am ersten Drehknopf (1) eine Verstellweglänge für die Fokussierbewegung und
- mit dem Drehwinkel am zweiten Drehknopf (2) eine Verstellgeschwindigkeit für die Fokussierbewegung vorgegeben wird und
- wobei die Veränderung des Drehwinkels am ersten Drehknopf (1) der Veränderung des Verstellweges und die Veränderung des Drehwinkels am zweiten Drehknopf (2) der Veränderung der Verstellgeschwindigkeit proportional sind.

2. Anordnung nach Anspruch 1, **dadurch gekennzeichnet, daß** die beiden Drehknöpfe (1, 2) konzentrisch um eine gemeinsame Achse drehbar und unmittelbar hintereinander auf dieser Achse angeordnet sind, wobei der Durchmesser des ersten Drehknopfes (1) kleiner ausgeführt ist als der Durchmesser des zweiten Drehknopfes (2).

3. Anordnung nach Anspruch 2, **dadurch gekennzeichnet, daß** der erste Drehknopf (1) nach beiden entgegengesetzten Drehrichtungen frei drehbar ist, die Drehwinkel in beiden Drehrichtungen in Winkelinkremente geteilt sind und jedes Winkelinkrement einem oder mehreren Weginkrementen des Verstellweges entspricht.

4. Anordnung nach einem der Ansprüche 2 bis 3, **dadurch gekennzeichnet, daß** der zweite Drehknopf (2) eine "Null"-Lage (5)aufweist, aus der er nach beiden entgegengesetzten Drehrichtungen gegen eine mit zunehmendem Verdrehwinkel anwachsende Rückstellkraft bis jeweils zu einer vorgegebenen Endlage verdrehbar ist, wobei in der "Null"-Lage (5) die Verstellgeschwindigkeit die Größe "Null" und in jeder der Endlagen die Verstellgeschwindigkeit ihr Maximum hat.

5. Anordnung nach Anspruch 4, **dadurch gekennzeichnet, daß** die Drehwinkel des zweiten Drehknopfes (2) nach beiden entgegengesetzten Drehrichtungen auf jeweils maximal 45° begrenzt sind.

6. Anordnung nach einem der Ansprüche 1 bis 5, **dadurch gekennzeichnet, daß** die Bedienelemente bzw. Drehknöpfe (1, 2) über Stellglieder zur Erzeugung drehwinkelabhängigen Stellsignale mit der Bedien- und Steuereinrichtung des Mikroskopes verbunden sind.

## Claims

1. Arrangement for manually adjusting a focus position in microscopes having a motorised focussing drive, provided with
- a first operating element for providing an adjustment path length during focussing movement and
- a second operating element for providing an adjustment speed during focussing movement,
- wherein the focussing movement can be selectively actuated either by means of the first or the second operating element or the two operating elements can be operated independently from one another,
**characterised in that** the two operating elements are constructed in the form of rotary knobs (1, 2), wherein
- the adjustment direction of the focussing movement is provided by the direction of rotation of the two rotary knobs (1, 2),
- an adjustment path length for the focussing movement is provided by the angle of rotation of the first rotary knob (1), and
- an adjustment speed for the focussing movement is provided by the angle of rotation of the second rotary knob (2), and
- wherein the change in the angle of rotation of the first rotary knob (1) is proportional to the change in the adjustment path and the change in the angle of rotation of the second rotary knob (2) is proportional to the change in the adjustment speed.

2. Arrangement as claimed in Claim 1, **characterised in that** the two rotary knobs (1, 2) are disposed so as to be rotatable concentrically about a common axis and are disposed directly one behind the other on this axis, wherein the diameter of the first rotary knob (1) is smaller than the diameter of the second rotary knob (2).

3. Arrangement as claimed in Claim 2, **characterised in that** the first rotary knob (1) is freely rotatable in the two opposite directions of rotation, the angles of rotation in the two directions of rotation are split into angular increments and each angular increment corresponds to one or more path increments of the adjustment path.

4. Arrangement as claimed in any one of Claims 2 to 3, **characterised in that** the second rotary knob (2) has a "zero" position (5) from where it can be rotated in the two opposite directions of rotation against a restoring force, which increases as the adjustment angle increases, up to a respective predetermined end position, wherein in the "zero" position (5) the adjustment speed has a magnitude of "zero" and in each of the end positions the adjustment speed is at its maximum value.

5. Arrangement as claimed in Claim 4, **characterised in that** the angle of rotation of the second rotary knob (2) is limited in the two opposite directions of rotation to a maximum value of 45° in each case.

6. Arrangement as claimed in any one of Claims 1 to 5, **characterised in that** the operating elements or rotary knobs (1, 2) are connected to the operating and controlling device of the microscope via actuating members for producing control signals which are dependent upon the angle of rotation.

## Revendications

1. Agencement pour le réglage manuel d'une position focale dans des microscopes avec une commande focale à moteur, muni
- d'un premier élément de commande pour la spécification d'une longueur de trajet de déplacement lors d'un mouvement de focalisation et
- d'un deuxième élément de commande pour la spécification d'une vitesse de déplacement lors du mouvement de focalisation,
- où le mouvement de focalisation peut être déclenché sélectivement soit avec le premier soit avec le deuxième élément de commande, respectivement les deux éléments de commande sont actionnables indépendamment l'un de l'autre,
**caractérisé en ce que** les deux éléments de commande sont réalisés sous la forme de boutons tournants (1,2), où sont spécifiées
- par la direction de rotation des deux boutons tournants (1,2) la direction de déplacement du mouvement de focalisation,
- par l'angle de rotation au premier bouton tournant (1) une longueur de chemin de déplacement pour le mouvement de focalisation et
- par l'angle de rotation au deuxième bouton tournant (2) une vitesse de déplacement pour le mouvement de focalisation et
- où la modification de l'angle de rotation au premier bouton tournant (1) est proportionnelle à la modification du chemin de déplacement, et la modification de l'angle de rotation au deuxième bouton tournant (2) est proportionnelle à la modification de la vitesse de déplacement.

2. Agencement selon la revendication 1, **caractérisé en ce que** les deux boutons tournants (1,2) peuvent tourner d'une manière concentrique autour d'un axe commun et sont disposés directement l'un derrière l'autre sur cet axe, où le diamètre du premier bouton tournant (1) est plus petit que le diamètre du deuxième bouton tournant (2).

3. Agencement selon la revendication 2, **caractérisé en ce que** le premier bouton tournant (1) peut tourner librement dans les deux directions de rotation opposées, les angles de rotation sont réparties dans les deux directions de rotation en incréments d'angles, et chaque incrément d'angle correspond à un ou plusieurs incréments du chemin de déplacement.

4. Agencement selon l'une des revendications 2 à 3, **caractérisé en ce que** le deuxième bouton tournant (2) présente une position « zéro » (5) à partir de laquelle il peut être amené à tourner dans les deux directions de rotation opposées contre une force de rappel qui croît au fur et à mesure que l'angle de rotation augmente à chaque fois jusqu'à une position finale prédéfinie, où dans la position « zéro » (5), la vitesse de déplacement a la grandeur « zéro » et dans chacune des positions finales, la vitesse de déplacement atteint son maximum.

5. Agencement selon la revendication 4, **caractérisé en ce que** les angles de rotation du deuxième bouton tournant (2) sont limités dans les deux direction de rotation opposées chacun à 45° au maximum.

6. Agencement selon l'une des revendications 1 à 5, **caractérisé en ce que** les éléments de commande respectivement boutons tournants (1,2) sont reliés par des organes de positionnement pour produire des signaux de positionnement dépendant de l'angle de rotation avec l'unité d'actionnement et de commande du microscope.
